# EUROPÄISCHE PATENTANMELDUNG

(11) **EP 1 759 984 A1**
(43) Veröffentlichungstag der Anmeldung: **07.03.2007**
(21) Anmeldenummer: 05018833.3
(22) Anmeldetag: 30.08.2005
(51) Int. Cl.: B63H 20/32, B63H 21/17

(54) **Zusammenlegbarer Aussenbordmotor**

(71) Anmelder: Torqeedo GmbH, 82319 Starnberg (DE)
(72) Erfinder: Kraft, Klaus, 89134 Blaustein (DE); Walk, Heinrich, 89604 Allmendingen (DE); Böbel, Friedrich, Dr., 82547 Eurasburg (DE)
(74) Vertreter: Gellner, Bernd

(57) **Zusammenfassung**

Die Erfindung betrifft einen transportierbaren Außenbordmotor mit einem Oberteil (1), einem Unterwasserteil (2) und einem das Oberteil (1) und das Unterwasserteil (2) verbindenden Schaft (4), wobei der Schaft (4) aus mindestens zwei Schaftteilen (4a, 4b, 4c) besteht, die in einer Betriebskonfiguration fest miteinander verbindbar sind und in einer Transportkonfiguration relativ zueinander bewegbar sind. Der Außenbordmotor ist als Elektromotor ausgeführt und ein elektrisches Kabel (8) ist vorgesehen, welches entlang des Schaftes (4) verläuft und das Oberteil (1) mit dem Unterwasserteil (2) verbindet, wobei zumindest ein Schaftteil (4a, 4b, 4c) in der Transportkonfiguration relativ zu dem Kabel (8) frei bewegbar ist.

## Beschreibung

Die Erfindung betrifft einen transportierbaren Außenbordmotor mit einem Oberteil, einem Unterwasserteil und einem das Oberteil und das Unterwasserteil verbindenden Schaft, wobei das Oberteil, der Schaft und das Unterwasserteil in eine Betriebskonfiguration und in eine Transportkonfiguration bringbar sind, wobei in der Betriebskonfiguration das Oberteil, der Schaft und das Unterwasserteil fest miteinander verbunden sind.

Übliche Außenbord-Verbrennungsmotoren besitzen ein Oberteil, welches als Gehäuse ausgeführt ist und in dem der Motor untergebracht ist, sowie ein Unterwasserteil, welches einen Propeller aufweist und einen das Oberteil und das Unterwasserteil verbindenden Schaft mit einer Welle, um die Kraft von dem Motor auf den Propeller zu übertragen.

Demgegenüber sind Elektro-Außenbordmotoren häufig so aufgebaut, dass das Unterwasserteil neben dem Propeller auch den Elektromotor umfasst. Das Oberteil kann mit einem Gehäuse zur Aufnahme der Batterien versehen sein oder lediglich als Steuerpinne dienen. In letzterem Fall sind die Batterien an geeigneter Stelle im Boot untergebracht. Durch den das Oberteil und das Unterwasserteil verbindenden Schaft werden bei einem Elektromotor üblicherweise elektrische Leitungen geführt.

Kleinere Boote mit Außenbordmotoren werden häufig mit Kraftfahrzeugen an den gewünschten Einsatzort, beispielsweise einen See, gebracht, aufgebaut und zu Wasser gelassen.

Durch die gezwungenermaßen längliche Ausführung des Schaftes sind Außenbordmotoren beim Transport sehr unhandlich. Wünschenswert wäre es, wenn der Außenbordmotor für Transportzwecke auf ein kleines und kompaktes Maß gebracht werden könnte.

In der US 1,790,856 wird hierzu vorgeschlagen, den Schaft eines Außenbord-Verbrennungsmotors mit einem Gelenk zu versehen, so dass das Unterwasserteil mit dem unteren Schaftteil zum Transport nach oben geklappt werden kann. Die in dem Schaft laufende Welle besteht ebenfalls aus zwei Teilen, die in Betriebskonfiguration des Schaftes formschlüssig ineinander greifen, so dass die vom Motor erzeugte Kraft über die Welle auf den Propeller übertragen werden kann.

Der in der US 1,790,856 offenbarte Faltmechanismus ist jedoch nicht ohne weiteres auf elektrische Außenbordmotoren übertragbar. Die eingesetzten Elektromotoren werden häufig mit hohen Strömen von bis zu 150 A betrieben, wodurch elektrische Leitungen mit einem Querschnitt von beispielsweise 15 mm² nötig sind. Solch starke Leitungen mit 15 mm² Querschnitt besitzen aber einen relativ großen Biegeradius, so dass ein Falten des Schaftes, wie in der US 1,790,856 beschrieben, nicht oder nur schwer möglich ist. Dies gilt insbesondere dann, wenn der Durchmesser des Schaftes selbst nur unwesentlich größer als der Kabelquerschnitt ist, so dass die elektrische Leitung zum Zusammenklappen des Schaftes geknickt werden müsste.

Aufgabe vorliegender Erfindung ist es daher, einen Außenbordmotor zu entwickeln, der zum Transport auf ein möglichst kompaktes Maß gebracht werden kann.

Diese Aufgabe wird durch einen Außenbordmotor der eingangs genannten Art gelöst, wobei der Außenbordmotor als Elektromotor ausgeführt ist und ein elektrisches Kabel vorgesehen ist, welches entlang des Schaftes verläuft und dass die relative Lage des elektrischen Kabels zu dem Schaft in der Betriebskonfiguration und in der Transportkonfiguration unterschiedlich ist.

Unter dem Begriff elektrisches Kabel beziehungsweise Kabel sollen hierbei alle Arten von den elektrischen Strom leitenden Elementen, insbesondere Kabel und Drähte, verstanden werden.

Der erfindungsgemäße Außenbordmotor weist ein Oberteil, ein Unterwasserteil und einen Schaft auf. Der Außenbordmotor kann in eine Betriebskonfiguration und in eine Transportkonfiguration gebracht werden.

In der Betriebskonfiguration sind das Oberteil, der Schaft und das Unterwasserteil fest miteinander verbunden, so dass die von dem Unterwasserteil mit dem Propeller ausgeübte Kraft über den Schaft auf das Boot übertragen werden kann.

Beim Wechsel von der Betriebskonfiguration in die Transportkonfiguration kann zumindest ein Teil des Kabels relativ zu dem Schaft bewegt werden. Die relative Position eines Teils des Kabels zum Schaft wird also beim Übergang von der Betriebskonfiguration in die Transportkonfiguration geändert.

Auf diese Weise kann der Außenbordmotor auf ein kleineres Volumen zusammengepackt werden, wobei das Kabel zumindest auf dem Teil seiner Länge, auf dem es relativ zum Schaft bewegbar ist, unter Berücksichtigung seiner Biegsamkeit aufgerollt oder anderweitig gepackt werden kann. Im Gegensatz zu der aus der US 1,790,856 bekannten Lösung können so der Schaft und das im oder entlang des Schaftes verlaufende Kabel zumindest teilweise unabhängig voneinander auf ein kleineres Volumen gebracht werden.

Vorzugsweise bleibt das Kabel beim Wechsel von der Betriebskonfiguration in die Transportkonfiguration sowohl mit dem Oberteil als auch mit dem Unterwasserteil fest verbunden.

Bei einer bevorzugten Ausführung weist der Schaft mindestens zwei Schaftteile auf, die in der Betriebskonfiguration fest miteinander verbunden sind. Zum Wechsel von der Betriebskonfiguration in die Transportkonfiguration ist zumindest ein Teil des Kabels relativ zu mindestens einem der Schaftteile frei bewegbar. Beispielsweise kann ein Schaftteil in der Transportkonfiguration so positioniert sein, dass ein Teil des Kabels nicht mehr entlang dieses Schaftteils verläuft.

Von Vorteil sind die Schaftteile hohl ausgeführt und das Kabel verläuft im Inneren der Schaftteile von dem Oberteil zu dem Unterwasserteil.

In der Transportkonfiguration ist vorzugsweise zumindest ein Schaftteil relativ zu dem Kabel entlang der Längsachse des Schaftteils bewegbar. Verläuft das Kabel im Inneren des Schaftteils, so ist das Schaftteil frei auf dem Kabel verschiebbar.

Der Außenbordmotor kann in eine besonders kompakte Anordnung gebracht werden, wenn alle Schaftteile relativ zu dem Kabel frei bewegbar sind. Die Schaftteile können dann beispielsweise gleichmäßig beabstandet über die Länge des Kabels verteilt werden oder auch alle an einem Kabelende positioniert werden, je nachdem welche Anordnung in Anbetracht der Ausgestaltung der Schaftteile und der Ausführung des Kabels, insbesondere dessen Länge und Biegsamkeit, eine günstigere und kompaktere Transportkonfiguration erlaubt.

Von Vorteil sind die Schaftteile in der Betriebskonfiguration zusammengesteckt. In einer bevorzugten Ausführungsform weisen die Schaftteile hierzu jeweils Verbindungsmittel auf, die so ausgeführt sind, dass diese, vorzugsweise formschlüssig, ineinander greifen. Insoweit sind insbesondere Steckverbindungen verschiedenster Art einsetzbar. Die Schaftteile können beispielsweise auf ihren Stirnflächen mit Steckvorrichtungen versehen sein, so dass diese in Längsrichtung der Schaftteile zusammengesteckt werden können. Ein Sicherungselement, wie zum Beispiel ein Sicherungsstift, ein Sicherungsbolzen oder eine Sicherungsschraube, gewährleisten, dass die Schaftteile im Betriebszustand fest verbunden bleiben.

Die Schaftteile können von Vorteil auch an ihren Stirnflächen mit Schwalbenschwanzähnlichen Führungen ausgestattet sein. Die Verbindung der Schaftteile erfolgt dann durch seitliches, das heißt quer zur Längsachse der Schaftteile gerichtetes, Schieben der Schaftteile ineinander.

Von Vorteil ist auch ein bajonettartiger Verbindungsmechanismus, bei dem die Schaftteile zunächst zusammengesteckt und anschließend durch eine Drehbewegung um eine Achse parallel zu deren Längsachse arretiert werden.

Bei einer weiteren bevorzugten Ausführungsform werden die Schaftteile in der Betriebskonfiguration in- oder aufeinander gesteckt und mittels einer Zugvorrichtung zusammengehalten oder miteinander verspannt. Besonders bevorzugt werden die Schaftteile jeweils mit einem Einsatz versehen, wobei beim Zusammenstecken der Schaftteile einer der Einsätze in einen anderen Einsatz geführt wird. Vorzugsweise besitzt ein Einsatz einen Konus, der in ein entsprechendes Gegenstück im anderen Einsatz geschoben oder gesteckt wird. Es hat sich weiter als günstig erwiesen, die Schaftteile mit Führungsbolzen und entsprechenden Gegenstücken zu versehen, welche in der Betriebskonfiguration ineinander greifen.

Mit einer Zugvorrichtung, vorzugsweise einem Zugseil, insbesondere einem Stahlseil, werden die Schaftteile zusammengezogen, wodurch die Einsätze fest in- oder aufeinander gepresst werden. Das Zugseil kann beispielsweise am Unterwasserteil befestigt sein und durch das Innere der Schaftteile bis zum Oberteil geführt werden. Am Oberteil sind von Vorteil Mittel zum Fixieren des Zugseils, zum Beispiel eine Klemm- oder Schraubvorrichtung, vorgesehen. Zur Verbindung der Schaftteile wird das Zugseil gespannt, so dass die Schaftteile zusammengepresst werden, und dann mit den Fixierungsmitteln fixiert.

Anstelle der genannten Einsätze, die bevorzugt aus Kunststoff, insbesondere aus Spritzgussteilen gefertigt sind, ist es auch möglich, die Enden der Schaftteile entsprechend umzuformen, so dass jeweils zwei Schaftteile zumindest teilweise ineinander gesteckt werden können.

Es hat sich ferner als günstig erwiesen, in Längsrichtung relativ zueinander verschiebbare Schaftteile vorzusehen. Beispielsweise kann eine Führung vorgesehen sein, um die Schaftteile parallel zueinander zu verschieben.

Diese Führung ist von Vorteil an der Außenseite eines Schaftteils angebracht, wobei das andere Schaftteil ein entsprechendes Gegenstück aufweist, welches in der Führung verschiebbar ist, oder wobei das andere Schaftteil selbst in der Führung verschiebbar ist. In der Betriebskonfiguration sind die Schaftteile in diesem Fall senkrecht zu ihrer Längsachse versetzt angeordnet. Die Länge des gesamten Schaftes kann durch Zusammenschieben der Schaftteile verringert werden. Der Schaft kann somit leicht auf ein kompaktes Transport- beziehungsweise Packmaß gebracht werden.

Eine andere bevorzugte Ausführungsform der Erfindung besteht darin, die Schaftteile teleskopartig ineinander verschiebbar anzuordnen. Die Fixierung der Schaftteile untereinander kann beispielsweise durch geeignete Sicherungsstifte oder Sicherungsschrauben erfolgen.

Weiter hat es sich als vorteilhaft erwiesen, die Schaftteile mit einem Gewinde zu versehen und ineinander zu schrauben. Ebenso ist es günstig, ein Schaftteil mit einem Bohrfutter auszurüsten, wie es von handelsüblichen Bohrmaschinen bekannt ist, und das andere Schaftteil mittels des Bohrfutters festzuklemmen.

Die Erfindung wird vorzugsweise bei einem Elektro-Außenbordmotor eingesetzt, dessen Schaft hohl ausgeführt ist und durch den ein elektrisches Kabel vom Oberteil zum Unterwasserteil geführt ist. Die Schaftteile können in der Transportkonfiguration entlang des elektrischen Kabels verschoben werden. Ist die Verbindung der Schaftteile so gestaltet, dass diese für den Transport zusammengeschoben werden können, beispielsweise bei der oben beschriebenen teleskopartigen Ausführungsform, so verbleibt nur ein kleiner Teil des elektrischen Kabels im Inneren der Schaftteile. Das restliche Kabel kann auf ein kleines Packmaß aufgerollt werden.

Sind die Schaftteile für den Transport des Außenbordmotors voneinander trennbar, wie dies beispielsweise bei einem aus mehreren Schaftteilen zusammengesteckten Schaft der Fall ist, so befinden sich nach dem Trennen der Schaftteile mehrere kurze Schaftteile auf dem Kabel. Das elektrische Kabel kann dann ebenfalls aufgerollt werden, wobei jeweils der Teil des Kabels der sich im Inneren eines Schaftteils befindet gerade verläuft und das Kabel zwischen zwei Schaftteilen gebogen werden kann. Der Biegeradius wird so gewählt, dass das Kabel nicht geknickt und beschädigt wird.

Die genannten Möglichkeiten, die Schaftteile untereinander zu verbinden, sind von Vorteil auch auf die Verbindung zwischen dem Oberteil und dem angrenzenden Schaftteil und auf die Verbindung zwischen dem Unterwasserteil und dem benachbarten Schaftteil übertragbar. Diese Verbindungen zwischen dem Oberteil und dem angrenzenden Schaftteil beziehungsweise zwischen dem Unterwasserteil und dem benachbarten Schaftteil sind bevorzugt lösbar ausgeführt, so dass der Schaft zum Transport auch vom Oberteil und / oder vom Unterwasserteil getrennt werden kann.

In der Transportkonfiguration sind nach dem Lösen aller Verbindungen zwischen dem Oberteil und dem Schaft, den Schaftteilen untereinander und zwischen dem Schaft und dem Unterwasserteil das Oberteil und das Unterwasserteil weiterhin über das elektrische Kabel miteinander verbunden. Die Schaftteile sind dabei frei auf dem Kabel beziehungsweise entlang des Kabels verschiebbar. Oberteil und Unterwasserteil können dann beispielsweise aufeinandergelegt werden und das Kabel mit den Schaftteilen wird um diese gewickelt. Auf diese Weise ist der erfindungsgemäße Außenbordmotor schnell und einfach auf ein kompaktes Packmaß reduzierbar.

Es kann auch Vorteile bringen, das elektrische Kabel über Steckverbindungen mit dem Oberteil und / oder dem Unterwasserteil zu verbinden. In diesem Fall können in der Transportkonfiguration Oberteil, Unterwasserteil, Schaftteile und Kabel gänzlich voneinander getrennt werden, wodurch sich je nach Ausführung des Motors das Packmaß weiter verringern lässt. Andererseits ist bei dieser Ausführungsform darauf zu achten, dass die Steckverbindungen beim Zusammenbau des Außenbordmotors immer eine gute elektrische Verbindung gewährleisten. Die Steckverbindungen sind daher zum Beispiel beim Transport vor Verunreinigungen zu schützen. Diese Gefahr wird bei der oben erläuterten Ausführung, bei der Oberteil und Unterwasserteil stets über das Kabel verbunden bleiben, ausgeschlossen.

Bevorzugt besteht der Schaft aus mindestens drei Schaftteilen, besonders bevorzugt aus höchstens fünf Schaftteilen. Hinsichtlich der Anzahl der Schaftteile ist zu beachten, dass mit steigender Zahl der Schaftteile das Transportmaß zwar verringert werden kann, dass aber je nach Ausführung die Stabilität des Schaftes abnehmen kann. Insoweit haben sich drei bis fünf Schaftteile als guter Kompromiss zwischen den Stabilitätsanforderungen und der gewünschten Kompaktheit erwiesen. In der Praxis hat sich gezeigt, dass hinsichtlich der Stabilität die oben beschriebene Ausführungsform mit gesteckten Schaftteilen, die über ein Zugseil zusammengezogen werden, besondere Vorteile bringt.

Die Erfindung sowie weitere Einzelheiten der Erfindung werden im Folgenden anhand von in den Zeichnungen dargestellten Ausführungsbeispielen näher erläutert. Hierbei zeigen:
- Figur 1: schematisch einen Elektro-Außenbordmotor für ein Boot,
- Figur 2: eine vergrößerte Darstellung des Details A,
- Figur 3: eine alternative Ausführung des Details A,
- Figur 4: eine weitere Ausgestaltung des Details A,
- Figur 5: eine weitere Ausgestaltung des Details A und
- Figur 6: die Draufsicht auf einen erfindungsgemäß gepackten Außenbordmotor.

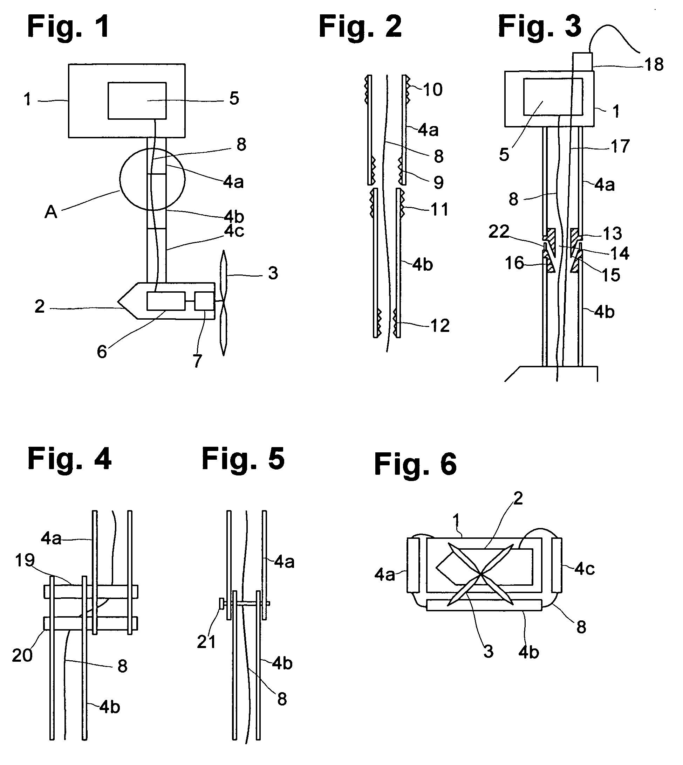

Der in Figur 1 dargestellte Außenbordmotor besteht im Wesentlichen aus einem Oberteil 1, einem Unterwasserteil 2, welches mit einem Propeller 3 versehen ist, und einem Schaft 4, der das Oberteil 1 mit dem Unterwasserteil 2 verbindet. Der gezeigte Bootsantrieb ist als Elektromotor ausgeführt. Das Oberteil 1 beinhaltet einen Batteriesatz 5 als Stromversorgung. Der eigentliche Elektromotor 6 befindet sich im Unterwasserteil 2 und treibt den Propeller 3 über eine nicht dargestellte Welle an. Gegebenenfalls ist ein Getriebe 7 dem Elektromotor 6 nachgeschaltet, um die Drehzahl des Elektromotors 6 zu reduzieren. Der Elektromotor 6 ist an den Batteriesatz 5 mittels eines elektrisch leitenden Kabels 8 angeschlossen, welches im Inneren des Schaftes 4 verläuft. Um die beim Betrieb des Elektromotors 6 hohen Strömen leiten zu können, wird ein elektrisches Kabel 8 mit einem Querschnitt von 10 mm² eingesetzt.

Der erfindungsgemäße Elektro-Außenbordmotor ist für den Transport auf ein handliches Maß zusammenpackbar. Hierzu ist der Schaft 4 in drei Schaftteile 4a, 4b, 4c geteilt, welche für den Transport auseinander genommen werden können. Im betriebsfertigen Zustand des Außenbordmotors sind die Schaftteile 4a, 4b, 4c dagegen fest miteinander verbunden.

Die Figuren 2 bis 5 zeigen verschiedene bevorzugte Ausgestaltungen der Verbindung der Schaftteile 4a, 4b, 4c.

So sind gemäß Figur 2 die Schaftteile 4a, 4b, 4c miteinander verschraubt. Das Schaftteil 4a ist als Rohr ausgeführt, welches an einem Ende ein Innengewinde 9 und am anderen Ende ein Außengewinde 10 besitzt. Die Schaftteile 4b, 4c sind analog ausgeführt.

In der Betriebskonfiguration, das heißt im betriebsbereiten Aufbau des Außenbordmotors, sind alle Teile 1, 4a, 4b, 4c, 2 miteinander verschraubt. Die Schraubverbindungen 9, 11 der beiden Schaftteile 4a, 4b erlauben ein stufenloses Verstellen der Schaftlänge. Alle Schraubverbindungen 9, 10, 11, 12 sind einfach zu handhaben und gewährleisten eine feste und sichere Verbindung des Oberteils 1 mit dem Schaftteil 4a, der Schaftteile 4a, 4b, 4c untereinander und des Schaftteils 4c mit dem Unterwasserteil 2. Das elektrische Kabel 8 wird im Inneren der Schaftteile 4a, 4b, 4c geführt.

Für den Transport werden alle Schraubverbindungen 9, 10, 11, 12 gelöst. Die Schaftteile 4a, 4b, 4c sind dann in der Transportkonfiguration frei auf dem Kabel 8 verschiebbar. Das Elektrokabel 8 mit den Schaftteilen 4a, 4b, 4c wird um den Umfang des Oberteils 1 gelegt, wie in Figur 6 schematisch dargestellt. Das Unterwasserteil 2 und der Propeller 3 werden auf dem Oberteil 1 angeordnet, wobei in der gezeigten Ausführung der Propeller 3 vom Unterwasserteil 2 abgenommen wurde. Es ist aber ebenso möglich, Propeller 3 und Unterwasserteil 2 als eine Einheit zu belassen. Der Außenbordmotor wird so auf ein handliches Maß gepackt und kann beispielsweise in einer geeigneten Tasche oder einem Rucksack transportiert werden.

In den Figuren 3 bis 5 sind alternative Ausführungen zum Verbinden zweier Schaftteile 4a, 4b gezeigt. Aus Gründen der Übersichtlichkeit sind jeweils nur zwei Schaftteile 4a, 4b dargestellt. Selbstverständlich sind die beschriebenen Verbindungsmöglichkeiten auch auf mehrere Schaftteile übertragbar.

In der Ausführung nach Figur 3 ist das obere rohrförmige Schaftteil 4a mit einem Kunststoffeinsatz 13 versehen, der eine zentrale Bohrung 14 und ein konisch zulaufendes Ende 15 aufweist. Am unteren Schaftteil 4b ist ein entsprechendes Gegenstück 16 aus Kunststoff angebracht. Die Verbindungen des Schaftteils 4a mit dem Oberteil 1 und des Schaftteils 4b mit dem Unterwasserteil 2 sind vorzugsweise in analoger Weise ausgeführt und ebenfalls mit ineinander greifenden Kunststoffeinsätzen versehen. Vorzugsweise sind an einem der Schaftteile 4b noch Führungsstifte 22 vorgesehen, die in entsprechende Aussparungen des anderen Schaftteiles 4a greifen.

Zum Transport können alle Teile 1, 4a, 4b, 2 auseinandergezogen, getrennt und beispielsweise analog zu Figur 6 gepackt werden.

Für den Einsatz, das heißt in der Betriebskonfiguration, werden die Teile 1, 4a, 4b, 2 zusammengesteckt. Ein Zugseil 17 ist fest mit dem Unterwassserteil 2 verbunden und verläuft zusammen mit dem Kabel 8 durch das Innere der Schaftteile 4a, 4b. Am Oberteil 1 ist eine Klemmvorrichtung 18 angebracht, in der das Zugseil 17 arretiert werden kann. Durch Zug am Zugseil 17 können so alle Teile 1, 4a, 4b, 2 fest miteinander verbunden werden.

In Figur 4 ist eine weitere Verbindungsmöglichkeit dargestellt. Die beiden Schaftteile 4a, 4b sind in diesem Fall parallel versetzt zueinander angeordnet. Verbindungselemente 19, 20 halten die beiden Schaftteile 4a, 4b zusammen. Die elektrische Leitung 8 verläuft im Inneren der beiden rohrförmigen Schaftteile 4a, 4b. Im Bereich der Verbindungsstelle sind die beiden Schaftteile 4a, 4b jeweils mit einem in der Zeichnung nicht dargestellten Schlitz versehen, durch den das Kabel 8 von einem Schaftteil 4a zum anderen Schaftteil 4b geführt wird.

Schließlich ist in Figur 5 eine Ausführung gezeigt, bei der die Schaftteile 4a, 4b ineinander gesteckt und mittels eines Sicherungsbolzens 21 gesichert sind.

## Patentansprüche

1. Transportierbarer Außenbordmotor mit einem Oberteil (1), einem Unterwasserteil (2) und einem das Oberteil (1) und das Unterwasserteil (2) verbindenden Schaft (4), wobei das Oberteil (1), der Schaft (4) und das Unterwasserteil (2) in eine Betriebskonfiguration und in eine Transportkonfiguration bringbar sind, wobei in der Betriebskonfiguration das Oberteil (1), der Schaft (4) und das Unterwasserteil (2) fest miteinander verbunden sind, **dadurch gekennzeichnet, dass** der Außenbordmotor als Elektromotor ausgeführt ist und ein elektrisches Kabel (8) vorgesehen ist, welches entlang des Schaftes (4) verläuft und dass die relative Lage des elektrischen Kabels (8) zu dem Schaft (4) in der Betriebskonfiguration und in der Transportkonfiguration unterschiedlich ist.

2. Außenbordmotor nach Anspruch 1, **dadurch gekennzeichnet, dass** der Schaft (4) aus mindestens zwei Schaftteilen (4a, 4b, 4c) besteht, wobei während des Wechsels zwischen der Betriebskonfiguration und der Transportkonfiguration zumindest ein Teil des Kabels relativ zu mindestens einem der Schaftteile (4a, 4b, 4c) frei bewegbar ist.

3. Außenbordmotor nach einem der Ansprüche 1 oder 2, **dadurch gekennzeichnet, dass** der Schaft (4, 4a, 4b, 4c) hohl ausgeführt ist und dass das Kabel (8) im Inneren des Schaftes (4, 4a, 4b,4c) verläuft.

4. Außenbordmotor nach einem der Ansprüche 1 bis 3, **dadurch gekennzeichnet, dass** während des Wechsels zwischen der Betriebskonfiguration und der Transportkonfiguration der Schaft (4) oder zumindest ein Schaftteil (4a, 4b,4c) relativ zu dem Kabel (8) in Richtung seiner Längsachse frei bewegbar ist.

5. Außenbordmotor nach einem der Ansprüche 2 bis 4, **dadurch gekennzeichnet, dass** in der Transportkonfiguration alle Schaftteile (4a, 4b,4c) relativ zu dem Kabel (8) frei bewegbar sind.

6. Außenbordmotor nach einem der Ansprüche 2 bis 5, **dadurch gekennzeichnet, dass** die Schaftteile (4a, 4b,4c) in der Betriebskonfiguration zusammengesteckt sind.

7. Außenbordmotor nach einem der Ansprüche 1 bis 6, **dadurch gekennzeichnet, dass** im Inneren des Schaftes (4) oder im Inneren der Schaftteile (4a, 4b,4c) ein Zugseil (17) vorgesehen ist.

8. Außenbordmotor nach einem der Ansprüche 2 bis 7, **dadurch gekennzeichnet, dass** während des Wechsels zwischen der Betriebskonfiguration und der Transportkonfiguration eines der Schaftteile (4a, 4b,4c) in ein anderes Schaftteil (4a, 4b,4c) verschiebbar ist.

9. Außenbordmotor nach einem der Ansprüche 2 bis 8, **dadurch gekennzeichnet, dass** eines der Schaftteile (4a, 4b,4c) an seiner Außenseite eine Führung (19, 20) aufweist, in der das andere Schaftteil (4a, 4b,4c) während des Wechsels zwischen der Betriebskonfiguration und der Transportkonfiguration verschiebbar ist.

10. Außenbordmotor nach einem der Ansprüche 1 bis 9, **dadurch gekennzeichnet, dass** während des Wechsels zwischen der Betriebskonfiguration und der Transportkonfiguration das Kabel (8) mit dem Schaft (4) oder mit den Schaftteilen (4a, 4b,4c) um das Oberteil (1) wickelbar ist.
